# EUROPÄISCHE PATENTSCHRIFT

(11) **EP 0 991 484 B1**
(45) Veröffentlichungstag und Bekanntmachung des Hinweises auf die Patenterteilung: **26.03.2003**
(21) Anmeldenummer: 98936134.0
(22) Anmeldetag: 09.06.1998
(51) Int. Cl.: B21B 37/46, H02P 5/00

(54) **VERFAHREN UND EINRICHTUNG ZUR VERRINGERUNG BZW. KOMPENSATION VON DREHZAHLEINBRÜCHEN BEIM EINFÄDELN EINES WALZGUTES IN EIN WALZGERÜST**
METHOD AND DEVICE FOR REDUCING OR COMPENSATING ROTATIONAL SPEED LOSSES DURING INSERTION OF ROLLING STOCK IN A ROLL STAND
PROCEDE ET DISPOSITIF POUR LA REDUCTION OU LA COMPENSATION DES CHUTES DE VITESSE DE ROTATION LORS DE L'INSERTION D'UN MATERIAU A LAMINER DANS UNE CAGE DE LAMINOIR

(30) Priorität: 23.06.1997 DE 19726586
(43) Veröffentlichungstag der Anmeldung: 12.04.2000
(73) Patentinhaber: SIEMENS AKTIENGESELLSCHAFT, 80333 München (DE)
(72) Erfinder: BALLHEIMER, Werner, D-91052 Erlangen (DE); GRÜSS, Ansgar, D-91058 Erlangen (DE); WEISSHAAR, Bernhard, D-91074 Herzogenaurach (DE)
(86) Internationale Anmeldenummer: DE9801587
(87) Internationale Veröffentlichungsnummer: WO98058752

(56) Entgegenhaltungen:
- EP-A- 0 680 138
- PATENT ABSTRACTS OF JAPAN vol. 096, no. 006, 28. Juni 1996 & JP 08 033911 A (FUJI ELECTRIC CO LTD), 6. Februar 1996
- PATENT ABSTRACTS OF JAPAN vol. 096, no. 001, 31. Januar 1996 & JP 07 245975 A (TOSHIBA CORP), 19. September 1995
- PATENT ABSTRACTS OF JAPAN vol. 095, no. 001, 28. Februar 1995 & JP 06 284763 A (NAGOYA KOGYO UNIV;OTHERS: 01), 7. Oktober 1994

## Beschreibung

Die Erfindung betrifft ein Verfahren bzw. eine Einrichtung zur Verringerung bzw. Kompensation von Drehzahleinbrüchen beim Einfädeln eines Walzgutes in ein Walzgerüst, dessen Walzendrehzahl mit einem Regler geregelt wird.

In einer Fertigstraße verursacht das einlaufende Bandmaterial beim Anstich in jedem Gerüst eine sprungartige Belastung. Für die Walzantriebe bedeutet dies ein steiles Ansteigen des Belastungsmomentes. Aufgrund des endlichen Massenträgheitsmomentes des Antriebs, bestehend aus den Massenträgheitsmomenten des Motors, der Kupplungen, Spindeln, Getrieben und Walzen, bricht zunächst die Drehzahl des Antriebs ein. Der Drehzahlregler sorgt danach für eine Rückführung der Drehzahl auf ihren Sollwert. Der Drehzahleinbruch verursacht eine Abbremsung des einlaufenden Bandes gegenüber dem im Stichplan vorbestimmten Geschwindigkeitssollwert, wodurch sich ein Materialrückstau ergibt. Dieser Rückstau äußert sich in der Bildung einer Bandschlinge vor dem Gerüst. Diese Bandschlinge darf nur so groß sein, daß sie von der Schlingenregelung und dem Schlingenheber beherrscht werden kann. Die Genauigkeit der Auslaufdicke des Bandes wird ebenfalls beeinflußt.

Die JP-A-8033911 offenbart ein Verfahren zur Verringerung bzw. zur Kompensation von Drehzahleinbrüchen beim Einfädeln eines Walzgutes in ein Walzgerüst. Dabei wird die Drehzahl mittels eines in einem vorgegebenen Übergangszeitintervall fest vorgegebenen Hilfskorrekturwerts geregelt.

Eine Standard-PI-Drehzahlregelung bzw. eine wie in der JP-A-8033911 offebarte Regelung ist bei hohen Anforderungen an die Größe der Schlinge, vor allem bei kurzen Lastanstiegszeiten, wie sie an den letzten Gerüsten einer Fertigstraße auftreten, häufig nicht dynamisch genug.

Entsprechend ist es Aufgabe der Erfindung, ein Verfahren bzw. eine Einrichtung zur Verringerung bzw. Kompensation von Drehzahleinbrüchen beim Einfädeln eines Walzgutes in ein Walzgerüst anzugeben.

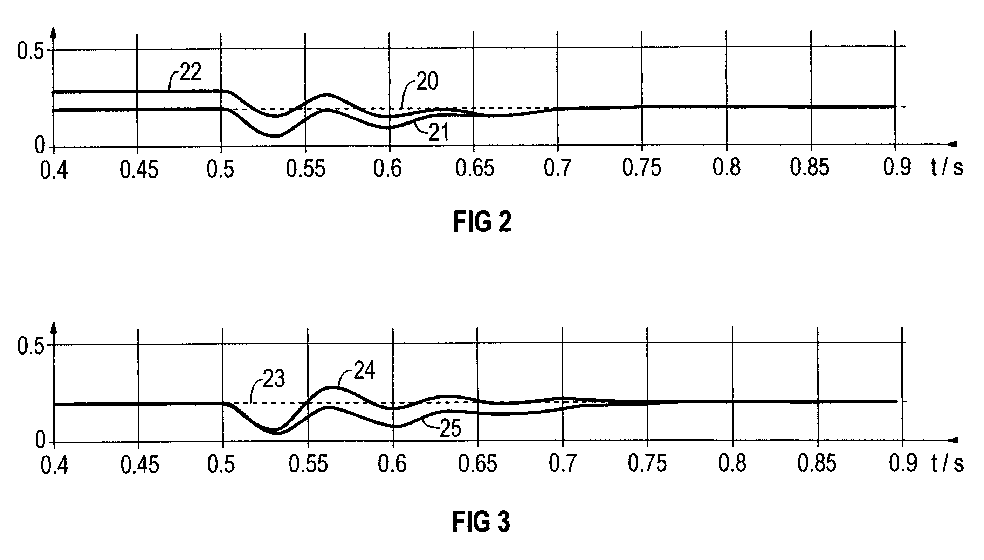

Die Aufgabe wird erfindungsgemäß durch ein Verfahren gemäß Anspruch 1 bzw. eine Einrichtung gemäß Anspruch 12 gelöst. Auf diese Weise lassen sich Drehzahleinbrüche deutlich verringern, wie z.B. FIG 3 zeigt.

Das erfindungsgemäße Verfahren wird besonders vorteilhaft für I-Regler oder als I-Regler ausgebildete Teilregler eingesetzt.

Besonders vorteilhaft ist es, das erfindungsgemäße Verfahren für einen Drehzahlregler einzusetzen. Wird die Drehzahlregelung durch einen Lastbeobachter ergänzt, wobei Integratoren zur Modellierung der Streckendynamik verwendet werden, so wird das erfindungsgemäße Verfahren vorteilhafterweise auch für die Integratoren oder einen Teil der Integratoren zur Modellierung der Streckendynamik im Lastbeobachter verwendet.

Weitere Vorteile und erfinderische Einzelheiten ergeben sich aus der nachfolgenden Beschreibung von Ausführungsbeispielen, anhand der Zeichnungen und in Verbindung mit den Unteransprüchen. Im einzelnen zeigen:
- FIG 1: eine Regelung mit beispielhaft ausgeführter erfindungsgemäßer Aufschaltung
- FIG 2: das Ergebnis eines bekannten Verfahrens zur Verringerung von Drehzahleinbrüchen
- FIG 3: das Ergebnis bei Verwendung des erfindunsgemäßen Verfahrens zur Verringerung von Drehzahleinbrüchen.
- FIG 4: eine Regelung und Vorsteuerung mit beispielhaft ausgeführter erfindungsgemäßer Aufschaltung

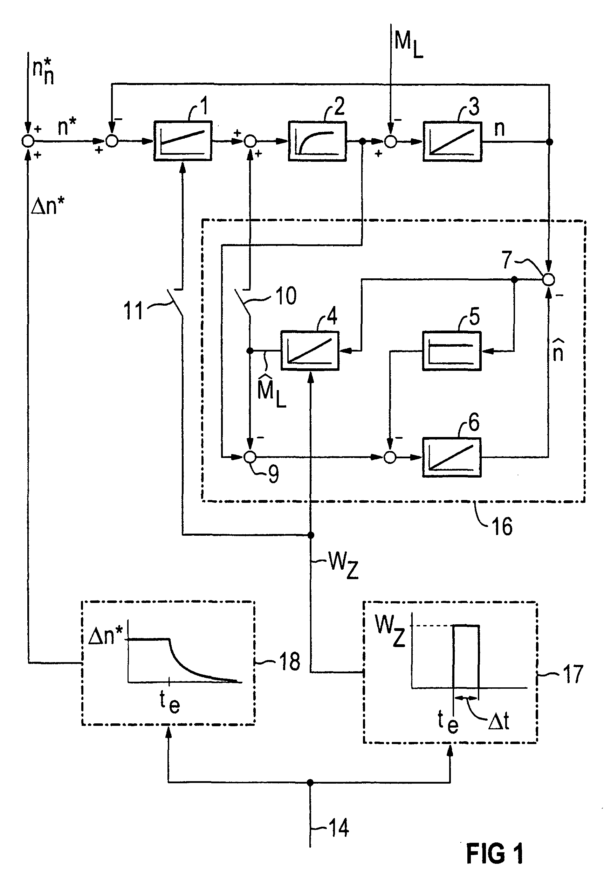

FIG 1 zeigt ein Blockschaltbild eines erfindungsgemäßen Reglers. Das Walzgerüst wird über einen mit einem Leistungsteil geregelten Motor 2 angetrieben, wobei dem Motormoment ein Lastmoment M_{L} entgegenwirkt. Die Walzendrehzahl ist dabei das Integral der Differenz von Antriebs- und Lastmoment. Dieser physikalische Zusammenhang wird durch den Integrator 3 modelliert. Diese Regelstrecke wird in der beispielhaften Ausgestaltung durch einen PI-Regler 1 in Abhängigkeit der Differenz von Solldrehzahl n* und Istdrehzahl n geregelt. In einer erfindungsgemäßen Ausgestaltung wird bei Einfädeln von Walzgut, insbesondere eines Walzbandes, in das Walzgerüst vom I-Anteil des PI-Reglers unabhängig von seinem Eingang ein Zusatzwert W_{Z} für ein vorgegebenes Übergangszeitintervall Δt ausgegeben.

Um den Drehzahleinbruch zu reduzieren, wird in der beispielhaften Ausgestaltung ein Lastbeobachter 16 vorgesehen. Er weist einen rückgeführten Integrator 6, ein Proportionalglied 5 und einen Lastintegrator 4 auf. An der Summationsstelle 7 wird die vom Integrator 6 nachgebildete Drehzahl n mit der gemessenen Drehzahl n des Motors verglichen. Die Differenz wird u.a. dem Lastintegrator 4 zugeführt. Sein Ausgang M̂_{L} entspricht im eingeschwungenen Zustand dem stationären Lastmoment M_{L}. Dieses wird im Summierer 9 mit dem gemessenen Motormoment (Motorstrom • Fluß) verglichen und die Differenz dem Integrator 6 zugeführt. Das nachgebildete Lastmoment M̂_{L} wird, wenn der Schalter 10 geschlossen ist, zu dem Drehzahlreglerausgang addiert. Der Drehzahlregler kann dann als P-Regler betrieben werden.

Zur weiteren Verbesserung ist das erfinderische Verfahren für den Lastbeobachter 16 einsetzbar, insbesondere für den Lastintegrator 4.

Das Walzkraftsignal 14 in FIG 1 dient als Triggersignal für den Anstich. Bei Auftreten des Walzkraftsignals 14 gibt der Zusatzwertgeber 17 einen Zusatzwert W_{Z} für die Dauer eines Übergangszeitintervalls Δt aus. Dieser Zusatzwert W_{Z} ist Eingangsgröße in den Lastintegrator 4 bzw. und/oder beim Lastbeobachter 16 in den I-Anteil des PI-Reglers 1. Liegt der Zusatzwert W_{Z} an, so gibt der Lastintegrator 4 (bzw. der I-Anteil des PI-Reglers 1) unabhängig von seinem Eingang den Zusatzwert W_{Z} aus. Dieser beträgt vorteilhafterweise das 2fache des zu erwartenden Lastmoments M_{L}. In einer weiteren Ausprägung kann (bei geschlossenem Schalter 11) der Zusatzwert W_{Z} auch nur dem Integralanteil (I-Anteil) des PI-Reglers vorgegeben werden. Der Schalter 10 des Ausgangs des Lastbeobachters 16 ist dann geöffnet oder kein Lastbeobachter vorgesehen.

Der Zusatzwert W_{Z} kann ein von der Zeit abhängiger oder vorteilhafterweise ein konstanter Wert sein. Dieser Wert beträgt vorteilhafterweise das 1,5 bis 2,5 fache, insbesondere das 2fache, des beim Einfädeln des Walzgutes in das Walzgerüst erwarteten Lastmoments. Das Übergangszeitintervall ist vorteilhafterweise 10 msec bis 100 msec, insbesondere 20 msec bis 40 msec, lang.

In Ergänzung zum erfindungsgemäßen Verfahren ist ein Drehzahlkorrekturglied 18 einsetzbar, das einen Korrektursollwert Δn* ausgibt, wie z.B. in der JP-A-8-33911, der JP-A-7-245975 oder der JP-A-6-284763 offenbart. Bereits vor dem Anstich wird dem gewünschten Drehzahlsollwert nₙ* der vom Betrag des zu erwartenden Lastmoments abhängige Korrektursollwert Δn* hinzuaddiert, so daß sich eine tatsächliche Solldrehzahl n* ergibt. Zum Anstichzeitpunkt bzw. Einfädelzeitpunkt tₑ, der ebenfalls über das Walzkraftsignal 14 detektiert wird, wird der Korrektursollwert Δn* gemäß einer geeigneten Zeitfunktion zurückgenommen.

FIG 2 zeigt das Verhalten der Drehzahl der Walzen über die Zeit t beim Einfädeln eines Walzbandes. Dabei erfolgt das Einfädeln des Walzbandes zum Zeitpunkt 0,5. Bezugszeichen 20 bezeichnet die gewünschte Solldrehzahl. Bezugszeichen 21 bezeichnet den Drehzahleinbruch bei einfacher Drehzahlregelung ohne zusätzliche Maßnahmen. Bezugszeichen 22 zeigt beispielhaft das Drehzahlverhalten bei Verwendung eines bekannten Korrektursollwertgebers, wie er in FIG 1 mit Bezugszeichen 18 bezeichnet ist.

FIG 3 zeigt das Verhalten der Drehzahl beim erfinderischen Verfahren. Dabei erfolgt das Einfädeln des Walzbandes zum Zeitpunkt 0,5. Bezugszeichen 23 bezeichnet die gewünschte Solldrehzahl. Bezugszeichen 25 bezeichnet den Drehzahleinbruch bei einfacher Drehzahlregelung ohne zusätzliche Maßnahmen. Bezugszeichen 24 bezeichnet die Drehzahl der Walzen bei Verwendung des erfindungsgemäßen Verfahrens im Zusammenhang mit einem Lastbeobachter entsprechend Bezugszeichen 16 in FIG 1.

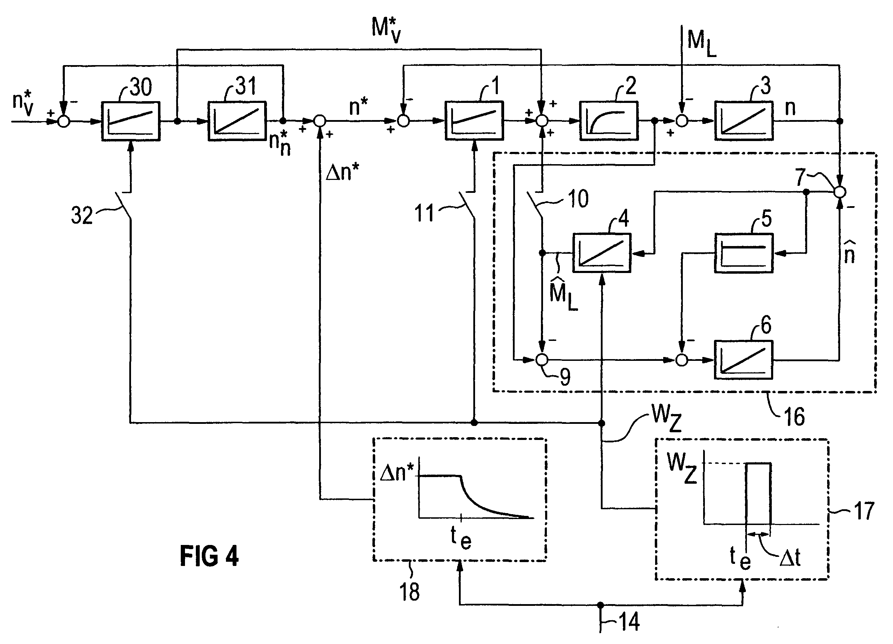

FIG 4 zeigt eine beispielhafte Ausgestaltung der Erfindung gemäß FIG 1 mit einer zusätzlichen Vorsteuerung. Die Vorsteuerung weist ein PI-Glied 30 und I-Glied 31 auf. Am Ausgang des PI-Gliedes 30, das wie der Regler 1 ausgestaltet ist, wird ein Momentensollwert Mᵥ* abgegriffen. Am Ausgang des I-Gliedes 31 wird der Drehzahlsollwert nₙ* gemäß dem entsprechenden Sollwert in FIG 1 erzeugt. Eingangsgröße in die Vorsteuerung ist ein Drehzahlsollwert nᵥ*. Über einen optionalen Schalter 32 wird der Zusatzwert W_{Z} auch dem PI-Glied 30 in der Vorsteuerung zugeführt.

## Patentansprüche

1. Verfahren zur Verringerung bzw. Kompensation von Drehzahleinbrüchen beim Einfädeln eines Walzgutes in ein Walzgerüst, dessen Drehzahl über einem Regler (1) geregelt wird, wobei die Regelung zur Verringerung bzw. Kompensation basierend auf einem in einem vorgegebenen Übergangszeitintervall (Δt) gegebenen, der Beeinflussung der Walzendrehzahl dienenden Zusatzwert (W_{z}) erfolgt,
**dadurch gekennzeichnet, dass** als Zusatzwert (W_{z}) ein das 1,5 bis 2,5-fache des beim Einfädeln des Walzgutes in das Walzgerüst erwarteten Lastmoments beschreibender Wert kurz vor, beim oder kurz nach dem Einfädeln gegeben wird, der in den Ausgang des Reglers (1) eingeht.

2. Verfahren nach Anspruch 1,
**dadurch gekennzeichnet, dass** der Regler (1) den Zusatzwert (W_{z}) als Ausgang ausgibt.

3. Verfahren nach Anspruch 1,
**dadurch gekennzeichnet, dass** der Zusatzwert (Wz) mit dem Ausgang des Reglers (1) addiert wird.

4. Verfahren nach einem der vorangehenden Ansprüche,
**dadurch gekennzeichnet, dass** der Regler (1) zumindest zwei Teilregler aufweist und dass zumindest ein Teilregler kurz vor dem Einfädeln des Walzgutes, beim Einfädeln des Walzgutes oder kurz nach dem Einfädeln des Walzgutes in das Walzgerüst in einem vorgegebenen Übergangszeitintervall (Δt) unabhängig von seinem Eingang einen vorgegebenen Zusatzwert (W_{z}) ausgibt.

5. Verfahren nach Anspruch 4,
**dadurch gekennzeichnet, dass** der Regler (1) zumindest zwei parallele Teilregler aufweist und dass zumindest ein Teilregler kurz vor dem Einfädeln des Walzgutes, beim Einfädeln des Walzgutes oder kurz nach dem Einfädeln des Walzgutes in das Walzgerüst in einem vorgegebenen Übergangszeitintervall (Δt) unabhängig von seinem Eingang einen vorgegebenen Zeitwert (W_{z}) ausgibt.

6. Verfahren nach Anspruch 4 oder 5,
**dadurch gekennzeichnet, dass** zumindest ein Teilregler ein I-Regler, d.h. ein Integrierer, ist und dass der I-Regler kurz vor dem Einfädeln des Walzgutes, beim Einfädeln des Walzgutes oder kurz nach dem Einfädeln des Walzgutes in das Walzgerüst in einem vorgegebenen Übergangszeitintervall (Δt) unabhängig von seinem Eingang einen vorgegebenen Zusatzwert (W_{z}) ausgibt.

7. Verfahren nach einem der vorangehenden Ansprüche,
**dadurch gekennzeichnet, dass** der Zusatzwert (W_{z}) konstant oder zeitabhängig ist.

8. Verfahren nach einem der vorangehenden Ansprüche,
**dadurch gekennzeichnet, dass** Übergangszeitintervall (Δt) 10ms bis 100ms, insbesondere 20ms bis 40ms, beträgt.

9. Verfahren nach einem der vorangehenden Ansprüche,
**dadurch gekennzeichnet, dass** der Regler einen Lastbeobachter (9) und/oder einen Drehzahlregler (1) aufweist.

10. Verfahren nach Anspruch 9,
**dadurch gekennzeichnet, dass** vor dem Einfädeln des Walzgutes in ein Walzgerüst die Solldrehzahl (n*) der Walzen des Walzgerüstes um einen vorgegebenen Wert (Δt*) erhöht und nach dem Einfädeln auf die gewünschte Solldrehzahl (nₙ*) für das Walzen abgesenkt wird.

11. Verfahren nach Anspruch 10,
**dadurch gekennzeichnet, dass** das Absenken der Solldrehzahl (n*) gemäß einer Hyperbel erfolgt.

12. Einrichtung zur Verringerung bzw. Kompensation von Drehzahleinbrüchen beim Einfädeln eines Walzgutes in ein Walzgerüst, mit einem Regler (1) zum Regeln der Walzendrehzahl, und einem Zusatzwertgeber (17) zum Geben eines der Beeinflussung der Walzendrehzahl dienenden Zusatzwertes (W_{z}) in einem vorgegebenen Übergangszeitintervall (Δt),
**dadurch gekennzeichnet, dass** über den Zusatzwertgeber (17) als Zusatzwert (W_{z}) ein das 1,5- bis 2,5-fache des beim Einfädeln des Walzgutes in das Walzgerüst erwarteten Lastmoments beschreibender Wert kurz vor, beim oder kurz nach dem Einfädeln gebbar ist, der in den Ausgang des Reglers (1) eingeht.

13. Einrichtung nach Anspruch 12,
**dadurch gekennzeichnet, dass** der Zusatzwert (W_{z}) vom Zusatzwertgeber (17) direkt an den Regler (1) gebbar ist.

14. Einrichtung nach Anspruch 12,
**dadurch gekennzeichnet, dass** der Zusatzwertgeber (18) mit einem Lastwertbeobachter (16) kommuniziert, über den der Zusatzwert (W_{z}) gebbar ist.

15. Einrichtung nach Anspruch 14,
**dadurch gekennzeichnet, dass** der Lastwertbeobachter (16) einen Lastintegrator (4) aufweist, an den der Zusatzwert (W_{z}) gebbar ist, und von dem der Zusatzwert (W_{z}) zur Addition mit dem Reglerausgang ausgebbar ist.

16. Einrichtung nach einem der Ansprüche 12 bis 15,
**dadurch gekennzeichnet, dass** der Zusatzwertgeber (17) zum Geben des Zusatzwerts (W_{z}) in einem Übergangszeitintervall (Δt) von 10ms bis 100ms, insbesondere von 20ms bis 40ms ausgebildet ist.

## Claims

1. Method for reducing or compensating for speed drops when threading stock to be rolled into a roll stand, the speed of which is controlled by way of a controller (1), with the control for the reduction or compensation being effected on the basis of a supplementary value (W_{z}) transmitted in a predefined transition time interval (Δt) and used to influence the rolling speed, **characterised in that** a value, which describes 1.5 to 2.5 times the expected moment of load when the stock to be rolled is threaded into the roll stand, is transmitted shortly before, during or shortly after the threading step as a supplementary value (W_{z}) that enters into the output of the controller (1).

2. Method according to claim 1, **characterised in that** the controller (1) outputs the supplementary value (W_{z}) as an output.

3. Method according to claim 1, **characterised in that** the supplementary value (W_{z}) is added to the output of the controller (1).

4. Method according to one of the preceding claims, **characterised in that** the controller (1) has at least two sub-controllers, and **in that** at least one sub-controller, irrespective of its input, outputs a predefined supplementary value (W_{z}) in a predefined transition time interval (Δt) shortly before the stock to be rolled is threaded, whilst the stock to be rolled is being threaded or shortly after the stock to be rolled has been threaded into the roll stand.

5. Method according to claim 4, **characterised in that** the controller (1) has at least two parallel sub-controllers, and **in that** at least one sub-controller, irrespective of its input, outputs a predefined time value (W_{z}) in a predefined transition time interval (Δt) shortly before the stock to be rolled is threaded, whilst the stock to be rolled is being threaded or shortly after the stock to be rolled has been threaded into the roll stand.

6. Method according to claim 4 or 5, **characterised in that** at least one sub-controller is an I controller, that is, an integrator, and **in that** the I controller, irrespective of its input, outputs a predefined supplementary value (W_{z}) in a predefined transition time interval (Δt) shortly before the stock to be rolled is threaded, whilst the stock to be rolled is being threaded or shortly after the stock to be rolled has been threaded into the roll stand.

7. Method according to one of the preceding claims, **characterised in that** the supplementary value (W_{z}) is constant or time-dependent.

8. Method according to one of the preceding claims, **characterised in that** the transition time interval (Δt) amounts to 10ms to 100ms, in particular to 20ms to 40ms.

9. Method according to one of the preceding claims, **characterised in that** the controller has a load monitor (9) and/or a speed controller (1).

10. Method according to claim 9, **characterised in that** before the stock to be rolled is threaded into a roll stand, the setpoint speed (n*) of the rolls of the roll stand is increased by a predefined value (Δt*) and after the threading step is lowered to the desired setpoint speed (nₙ*) for rolling.

11. Method according to claim 10, **characterised in that** the setpoint speed (n*) is lowered in accordance with a hyperbola.

12. Device for reducing or compensating for speed drops when threading stock to be rolled into a roll stand, having a controller (1) for controlling the rolling speed, and a supplementary value generator (17) for transmitting a supplementary value (W_{z}), which is used to influence the rolling speed, in a predefined transition time interval (Δt), **characterised in that** a value, which describes 1.5 to 2.5 times the expected moment of load when the stock to be rolled is threaded into the roll stand, can be transmitted by way of the supplementary value generator (17) shortly before, during or shortly after the threading step as a supplementary value (W_{z}) that enters into the output of the controller (1).

13. Device according to claim 12, **characterised in that** the supplementary value (W_{z}) can be transmitted directly to the controller (1) by the supplementary value generator (17).

14. Device according to claim 12, **characterised in that** the supplementary value generator (18) communicates with a load-value monitor (16) by way of which the supplementary value (W_{z}) can be transmitted.

15. Device according to claim 14, **characterised in that** the load-value monitor (16) has a load integrator (4) to which the supplementary value (W_{z}) can be transmitted and from which the supplementary value (W_{z}) can be output for addition to the controller output.

16. Device according to one of claims 12 to 15, **characterised in that** the supplementary value generator (17) is designed to transmit the supplementary value (W_{z}) in a transition time interval (Δt) of 10ms to 100ms, in particular from 20ms to 40ms.

## Revendications

1. Procédé de diminution ou de compensation de pertes de vitesse de rotation lors de l'insertion d'un matériau à laminer dans une cage de laminoir, dont la vitesse de rotation est régulée par un régulateur (1), la régulation pour la diminution ou la compensation reposant sur une valeur (Wz) supplémentaire, donnée dans un intervalle (Δt) de temps de transition donné à l'avance et servant à influencer la vitesse de rotation du cylindre,
**caractérisé en ce que** l'on prend peu avant, pendant ou peu après l'insertion, comme valeur (Wz) supplémentaire, une valeur qui représente de 1,5 à 2,5 fois le couple de charge auquel on s'attend lors de l'insertion du matériau à laminer et dans la cage de laminoir et que l'on envoie à la sortie du régulateur (1).

2. Procédé suivant la revendication 1,
**caractérisé en ce que** le régulateur (1) émet comme sortie la valeur (Wz) supplémentaire.

3. Procédé suivant la revendication 1,
**caractérisé en ce que** la valeur (Wz) supplémentaire est ajoutée à la sortie du régulateur (1).

4. Procédé suivant l'une des revendications précédentes,
**caractérisé en ce que** le régulateur (1) a au moins deux sous-régulateurs et **en ce qu'**au moins un sous-régulateur émet, peu avant l'insertion du matériau à laminer, lors de l'insertion du matériau à laminer ou peu après l'insertion du matériau à laminer dans la cage de laminoir, une valeur (Wz) supplémentaire prescrite dans un intervalle (Δt) de temps de transition donné à l'avance indépendamment de son entrée.

5. Procédé suivant la revendication 4,
**caractérisé en ce que** le régulateur (1) a au moins deux sous-régulateurs en parallèle et **en ce qu'**au moins un sous-régulateur émet peu avant l'insertion du matériau à laminer, lors de l'insertion du matériau à laminer ou peu après l'insertion du matériau à laminer dans la cage de laminoir, une valeur (Wz) supplémentaire prescrite dans un intervalle (Δt) de temps de transition donné à l'avance indépendamment de son entrée.

6. Procédé suivant la revendication 4 ou 5,
**caractérisé en ce qu'**au moins un sous-régulateur est un régulateur I, c'est-à-dire un intégrateur, et **en ce que** le régulateur I émet peu avant l'insertion du matériau à laminer, lors de l'insertion du matériau à laminer ou peu après l'insertion du matériau à laminer dans la cage de laminoir, une valeur (Wz) supplémentaire prescrite dans un intervalle (Δt) de temps de transition donné à l'avance indépendamment de son entrée.

7. Procédé suivant l'une des revendications précédentes,
**caractérisé en ce que** la valeur (Wz) supplémentaire est constante ou dépend du temps.

8. Procédé suivant l'une des revendications précédentes,
**caractérisé en ce que** l'intervalle (Δt) de temps de transition va de 10ms à 100ms, et notamment va de 20ms à 40ms.

9. Procédé suivant l'une des revendications précédentes,
**caractérisé en ce que** le régulateur a un observateur (9) de charge et/ou un régulateur (1) de vitesse de rotation.

10. Procédé suivant la revendication 9,
**caractérisé en ce qu'**avant l'insertion du matériau à laminer dans une cage de laminoir on augmente la vitesse (n*) de rotation de consigne des cylindres de la cage de laminoir d'une valeur (Δt*) donnée à l'avance et après l'insertion on l'abaisse à la vitesse (nₙ*) de rotation de consigne souhaitée pour le cylindre.

11. Procédé suivant la revendication 10,
**caractérisé en ce que** l'abaissement de la vitesse (n*) de rotation de consigne s'effectue suivant une hyperbole.

12. Dispositif de diminution et de compensation de pertes de vitesse lors de l'insertion d'un matériau à laminer dans une cage de laminoir, comprenant un régulateur (1) destiné à réguler la vitesse de rotation des cylindres et un générateur (17) de valeur supplémentaire destiné à donner dans un intervalle (Δt) de temps de transition donné à l'avance une valeur (Wz) supplémentaire servant à influer sur la vitesse de rotation des cylindres,
**caractérisé en ce qu'**il peut être donné par le générateur (17) de valeur supplémentaire, peu avant, pendant ou peu après l'insertion, en tant que valeur (Wz) supplémentaire une valeur représentant de 1,5 à 2,5 fois le couple de charge auquel on s'attend lors de l'insertion d'un matériau à laminer dans la cage de laminoir, valeur que l'on envoie à la sortie du régulateur (1).

13. Dispositif suivant la revendication 12,
**caractérisé en ce que** la valeur (Wz) supplémentaire peut être envoyé du générateur (17) de valeur supplémentaire directement au régulateur (1).

14. Dispositif suivant la revendication 12,
**caractérisé en ce que** le générateur (18) de valeur supplémentaire communique avec un observateur (16) de valeur de charge, par lequel la valeur (Wz) supplémentaire peut être donnée.

15. Dispositif suivant la revendication 14,
**caractérisé en ce que** l'observateur (16) de valeur de charge comprend un intégrateur (4) de charge, auquel la valeur (Wz) supplémentaire peut être donnée et duquel la valeur (Wz) supplémentaire peut être émise en vue de l'addition à la sortie du régulateur.

16. Dispositif suivant l'une des revendications 12 à 15,
**caractérisé en ce que** le générateur (17) de valeur supplémentaire est constitué pour donner la valeur (Wz) de charge dans un intervalle (Δt) de temps de transition de 10ms à 100ms et notamment de 20ms à 40ms.
